# EUROPEAN PATENT APPLICATION

(11) **EP 1 860 557 A1**
(43) Date of publication of application: **28.11.2007**
(21) Application number: 06114513.2
(22) Date of filing: 24.05.2006
(51) Int. Cl.: G06F 11/07

(54) **Method of handling fault codes in a memory**

(71) Applicant: ROBERT BOSCH GMBH, 70442 Stuttgart (DE)
(72) Inventor: Vijay, Peter, Bangalore, Karnataka 560005 (IN); Huether, Clemens, Gerlingen 70839 (DE)

(57) **Abstract**

The invention provides for a method of handling fault codes being stored in a memory (10) of an automotive embedded system (12), where an deletion of the fault code from the memory (10) is carried out based on time lapse. Furthermore, the invention provides for a memory device (10) used for executing said method.

## Description

The invention refers to a method of handling fault codes being stored in a memory of an automotive embedded system.

### State of the art

Methods and devices for fault storage in automotive embedded systems being used for vehicle control are well known in the state of the art. Such control equipment can be, for example, a single control device, which is the only one in the motor vehicle or which operates independently of other control and can be used for control of functional elements in a vehicle, for example brakes, adjustable suspension, transmission and safety equipment.

DE 40 40 927 A1 discloses a method and a device for fault storage in vehicle control equipment comprising a fault sequence memory for storing faults in order of occurrence and a fault register memory. Marking flags can be set in the fault register memory to indicate the existence of faults of a number of preset fault types.

DE 41 18 692 A1 discloses a device for fault storage in vehicle control equipment comprising fault time counting means with m time counters, m being greater than 1, and fault storage means for the storage of information data for n faults, n being greater than m. A fault is recorded to be permanently capable of being called up when it has lasted for longer than a test time span preset for this fault.

### Disclosure of the invention

The present invention proposes a method of handling fault codes being stored in a memory of an automotive embedded system, wherein a deletion of a fault code is carried out based on time lapse.

The deletion of the fault code can be carried out based on duration of days, for example after the expiration of 400 days or 9,600 hours. The deletion according to the invention can be carried out automatically. In that case, once 400 days or 9,600 hours have elapsed, the fault is deleted automatically by the system.

According to a further embodiment of the method according to the present invention, in case of a fault, a fault code representing the fault is stored along with day, month and year, in an EEPROM for example. Therefore, the stored day, month and year will be compared with the current day, month and year in order to determine the time lapse. Possible assumptions are:
1. All months have 30 days.
2. All years have 30 * 12 = 360 days.

Alternatively, it is possible to consider the actual number of days in a year. Moreover, leap years can be taken into consideration.

It is also possible that the fault code is deleted a preset number of days, 400 days for example, after the represented fault is rectified. In that case, the date of rectifying has to be stored.

Furthermore, a CAN bus (CAN: controller area network) can be used, thus the memory, the EEPROM for example, receive the fault along with the date over CAN.

The memory device according to the invention used in an automotive embedded system is adapted for storing fault codes therein. Said memory device is associated with means for determining the current date, means for comparing the current date with the date of the fault indicated by the fault code and means for deleting the fault code when the difference between the current date and the fault date is found to be greater than a preset term.

According to an embodiment, the memory device is adapted to delete the fault code when the difference is found to be greater than 400 days or 9,600 hours.

Preferably, the memory device is connected to a CAN bus for sending and receiving fault codes along with corresponding dates.

An EEPROM adapted according to the invention can be used as the memory device.

The invention also refers to a computer program product with a computer-readable medium and a computer program stored on the computer-readable medium with program coding means which are suitable for carrying out a method according to the present invention. A computer program with program coding means which are suitable for carrying out a method according to the present invention when the computer program is run on a computer is also disclosed.

The present invention further covers a computer-readable medium with a computer program stored thereon, the computer program comprising program coding means which are suitable for carrying out a method according to the present invention when the computer program is run on a computer.

Further features and embodiments of the invention will become apparent from the description and the accompanying drawings.

It will be understood that the features mentioned above and those described hereinafter can be used not only in the combination as specified but also in other combinations or on their own, without departing from the scope of the present invention.

The invention is schematically illustrated in the drawings by way of example and is hereinafter explained in detail with reference to the drawings. It is understood that the description is in no way limiting on the scope of the present invention and is merely an illustration of preferred embodiments of the invention.

### Brief description of the drawings

Figure 1 shows schematically an embodiment of the memory device according to the present invention.
Figure 2 shows a state machine illustrating an embodiment of the method according to the present invention.
Figure 3 shows a flow chart illustrating a further embodiment of the method according to the invention.

### Embodiments of the invention

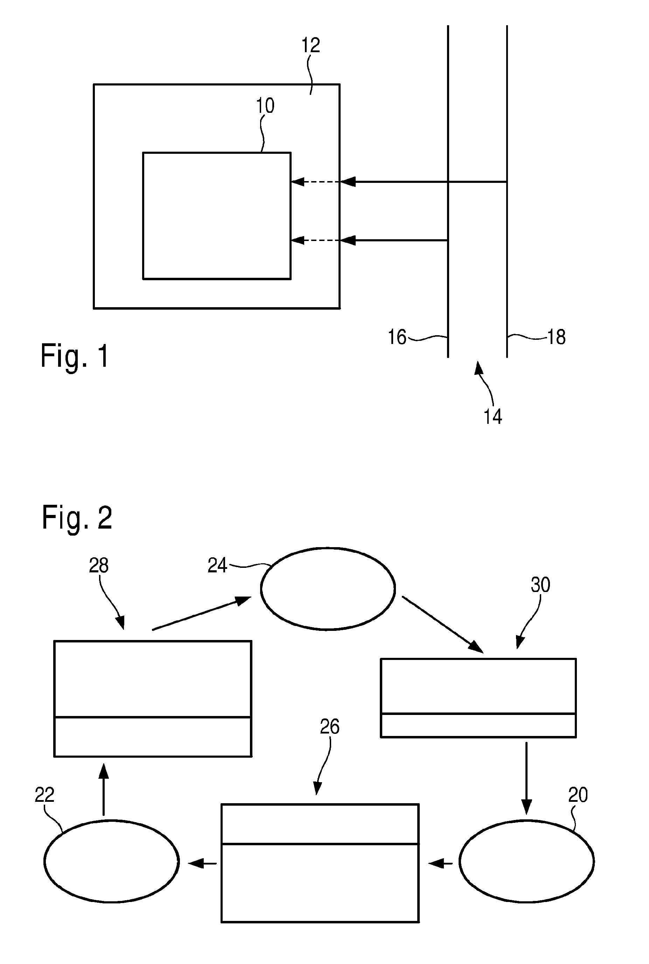

Figure 1 shows a memory device 10 according to the invention embedded in an On Board Diagnostics system (OBD system) 12. The memory device 10 acts as a fault memory and is connected, as the OBD system 12, to a CAN bus 14 comprising a CAN High 16 and CAN Low 18 line.

When a fault occurs a fault code representing that fault is stored in the memory device 10.

When the system is turned on and it is found that the fault disappears, the day, month and year is stored and the difference in days between current day, month and year received over CAN and stored day, month and year of the fault in memory is checked once. When the difference is found to be greater than 400 days the fault is deleted.

Therefore, the method of deletion based on prediction comprising the steps of extracting the stored day, month and year of the fault, predicting after 400 days, the day, month and year using the stored day, month and year as reference, and checking if the current day, month and year received over CAN exceeds the predicted day, month and year. If it exceeds, the fault is deleted from the memory device 10.

Figure 2 shows a state machine illustrating a possible operation according to the present invention.

State 20 represents the state "Fault Present", state 22 represents the state "Fault Rectified", and state 24 represents the state "Fault Deleted Or Not Present in Fault Memory".

The requirement for state transition from state 20 to state 22 is:
"Fault condition ceases to exist".

The action in connection with this state transition 26 is:
Capture Day
Capture Month
Capture Year
Above data received over CAN.

The requirement for state transition 28 is:
"Difference between Current Day, Month and Year received over CAN and Captured Day, Month and Year" is found to be greater than the present term.

The action associated with the state transition 28 is:
Delete Fault.

The requirement for state transition 30 is:
"Conditions satisfied to report a fault exist".

The associated action is:
Store Fault in Fault memory

The prediction for day, month and year can be carried out as follows:
1. Start counting up from the stored day for the total duration (400 days) intended for storage.
2. When the days exceed the total number of days in a month (30) count up the months from the stored month.
3. When the months exceed the total number of month in a year (12) count up the years from the stored year.
4. Once the days are counted up for the duration (400 days, Applicable) as followed in the above steps 2 and 3, we will arrive at the predicted day, month and year.
5. The difference between the predicted day, month and year and the stored day, month and year will be the total duration intended for storage.

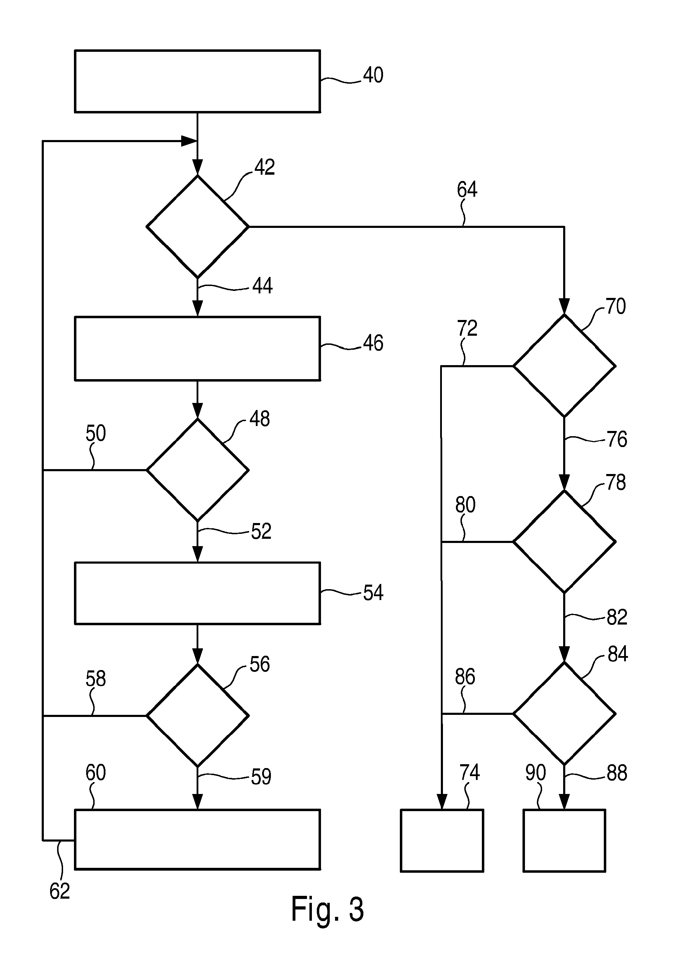

Figure 3 shows a flow chart illustrating the method of fault deletion according to the invention.

In Step 40 following assignments are made:
Predicted day = Stored day
Predicted month = Stored month
Predicted year = Stored year

Afterwards, in step 42, the number of loopings is compared with the duration in days:
Looping = Duration in Day times

If the looping is not completed 44, following assignment is made in step 46:
Predicted Day = Predicted Day + 1

After that, in step 48, it is checked, if the Predicted Day exceeds 30:
Check if Predicted Day > 30

If the result of check in step 48 is FALSE, the loop is closed 50. In case that the result is TRUE 52, following assignments are made in step 54:
Predicted Day = 1
Predicted Month = Predicted Month + 1

After that, in step 56, it is checked, if the Predicted Month exceeds 12:
Check if Predicted Month > 12

If the result of check in step 56 is FALSE, the loop is closed 58. In case that the result is TRUE 59, following assignments are made in step 60:
Predicted Month = 1
Predicted Year = Predicted Year + 1

Afterwards, the loop is closed 62.

Returning to step 42, if the looping is completed 64, it is checked in step 70:
Check if Current Year > Predicted Year

If the result of this check is TRUE 72, the fault is deleted in step 74. In case that the result in step 70 is FALSE 76, it is checked in the following step 78:
Check if Current Month > Predicted Month

If the result of this check is TRUE 80, the fault is deleted in step 74. In case that the result in step 78 is FALSE 82, it is checked in the following step 84:
Check if Current Day > Predicted Day

If the result of this check is TRUE 86, the fault is deleted in step 74. In case that the result in step 84 is FALSE 88, the fault is not deleted, as represented by step 90.

The method according to the invention can be used for automotive embedded systems which use CAN to delete faults stored in memory based on duration.

## Claims

1. A method of handling fault codes being stored in a memory (10) of an automotive embedded system (12), wherein an deletion of a fault code from the memory (10) is carried out based on time lapse.

2. The method according to claim 1, wherein the fault code is deleted after the expiration of 400 days.

3. The method of claim 1 or 2, wherein the deletion is carried out automatically.

4. The method according to any one of the preceding claims, wherein, in case of a fault, a fault code associated to that fault is stored in an EEPROM along with day, month and year.

5. The method according to any one of the preceding claims, wherein a CAN bus (14) is used.

6. The method according to any one of the preceding claims, wherein the fault code is deleted a preset number of days after it is rectified.

7. A memory device used in an automotive embedded system (12) adapted for storing fault codes therein, associated with means for determining the current date, means for comparing the current date with the date of the fault indicated by the fault code and means for deleting the fault code when the difference between the current date and the fault date is found to be greater than a preset term.

8. The memory device according to claim 7, adapted to delete the fault code when the difference is found to be greater than 400 days.

9. The memory device according to claim 7 or 8, connected to a CAN bus (14).

10. The memory device according to one of claims 7 to 9, implemented in an EEPROM.

11. A computer program product with a computer-readable medium and a computer program stored on the computer-readable medium with program coding means which are suitable for carrying out a method according to any one of claims 1 to 6 when the computer program is run on a computer.

12. A computer program with program coding means which are suitable for carrying out a method according to any one of claims 1 to 6 when the computer program is run on a computer.

13. A computer-readable medium with a computer program stored thereon, the computer program comprising program coding means which are suitable for carrying out a method according to any one of claims 1 to 6 when the computer program is run on a computer.
